# EUROPEAN PATENT APPLICATION

(11) **EP 2 772 727 A1**
(43) Date of publication of application: **03.09.2014**
(21) Application number: 13194915.8
(22) Date of filing: 28.11.2013
(51) Int. Cl.: G01C 23/00

(54) **Method and System for Highlighting a Flight Path Deviation of an Aircraft**

(30) Priority: 01.03.2013 US 201313782981
(71) Applicant: Innovative Solutions and Support, Inc., Exton, PA 19341 (US)
(72) Inventor: Hedrick, Geoffrey S.M., Malvern, PA 19355 (US); Glover, Michael Edward, Villa Rica, GA 30180 (US)
(74) Representative: Calderbank, Thomas Roger

(57) **Abstract**

A method and system for highlighting a flight path deviation of an aircraft to a user in a multi-parameter aircraft instrument display, such as a flat panel display. A visibility attribute is configured to toggle between a standard state when the actual aircraft position is within a predetermined range of the target aircraft position, and an enhanced state when the actual aircraft position is outside the predetermined range. The electronic display is configured to highlight a flight path deviation when in the enhanced state, such as by displaying deviation scales having an actual aircraft position indicator relative to the target position, and increasing the size or changing the color of certain displayed elements, or displaying/concealing new elements. Such display features aid in focusing the pilot's attention to deviations from optimal flight paths and ensuring navigation accuracy and, therefore, safety.

## Description

### Cross-Reference to Related Applications

This application is related to copending U.S. Patent Application No. 12/830,061, filed July 2, 2010, which is a continuation-in-part of U.S. Patent Application No. 11/635,135, filed December 7, 2006, now U.S. Patent No. 7,752,567, which is a continuation of U.S. Patent Application No. 10/616,208, filed July 8, 2003, now U.S. Patent No. 7,346,854, which claims priority from U.S. Provisional Patent Application No. 60/394,591, filed July 8, 2002, the contents of which applications are hereby incorporated by reference in their entirety.

### Field of the Invention

The present invention is directed to the display of flight path deviation of an aircraft on a multi-parameter aircraft instrument display, such as a flat panel display, in which there are a plurality of simultaneously displayed parameters, and more particularly to a method and system of providing easily recognizable visual indicia in the multi-parameter display which highlights to the user that the aircraft has deviated from the desired flight path, as well as the extent of such deviation.

### Background of the Invention

Modern aircrafts generally utilize digital flat panel displays (FPDs) on which aircraft parameters are displayed for viewing and use by the pilot(s) and/or flight crew. Examples of FPD displays include highly integrated flight displays such as a Primary Flight Display, a Navigation Display - or Multi-Function Display - or any displays that are part of an Electronic Flight Instrument System (EFIS). A Primary Flight Display may display flight parameters (whether actual, target, reference and/or limit values) such as orientation, speed, altitude and heading. A Navigation Display - or Multi-Function Display - may display route and weather information as well as airspace and traffic information. Such multipurpose FPDs may thus present a multiplicity of information and data intermixed in and among a crowded field.

If an aircraft deviates from its flight path, the PFD may or may not include a pointer that shows the extent of the deviation, or a digital readout that shows the actual value of the parameter which as it changes from its target value. If a pilot or crew member is paying close attention to such visual cues, he or she may be alerted to the fact that the aircraft is deviating from its flight path. However, because FPDs present so much continuously changing information in a crowded field (which they fit by displaying them in a relatively small format and/or numeric typesize), the pilot or crew member may not pay attention to displayed item(s) that are meant to depict the deviation, especially given that there are multiple other displays which the pilot is required to continuously monitor (such as parameters shown in Engine Instrument Display).

This problem is especially apparent in multipurpose FPDs that concurrently display numerous different types of information and data to the aircraft pilot, thereby increasing the opportunity for a busy or task-overloaded pilot to inadvertently or miss an opportunity to quickly take corrective measures. This is particularly important in critical situations such as during landing approaches.

In other situations, the pilot or crew member may not realize that a deviation has occurred until a much later time. To prevent this from happening, the pilot or crew member must devote unusual attention to such a display in order to appreciate such deviation. This may prove difficult for a busy or task-overloaded pilot or crew member whose responsibilities and workload include maintaining situational awareness and otherwise operating and controlling the aircraft, particularly during critical times.

Therefore, there is a need for providing easily recognizable visual indicia on a multi-parameter aircraft instrument display to direct a pilot or crew member's attention to navigation or flight path deviation of an aircraft, alleviate pilot workload and highlight the extent to which the aircraft has deviated.

There is also a need for providing easily recognizable visual indicia on a multi-parameter aircraft instrument display to direct a pilot or crew member's attention to navigation or flight path deviation of an aircraft to increase navigation accuracy and, therefore, safety.

### Summary

In various embodiments, the invention provides methods, systems, and apparatuses for highlighting aircraft flight path deviation in a cockpit or flight deck environment in which the data is digitally displayed on a multi-parameter electronic aircraft instrument display such as a flat panel display (FPD), such for example as a liquid crystal, display (LCD), in which there are a plurality of simultaneously displayed parameters, and more particularly to a method and system of providing easily recognizable visual indicia in the multi-parameter display which highlight to the user that the aircraft has deviated from the desired flight path, as well as the extent of such deviation.

The electronic display is coupled to a graphics rendering controller which is configured to generate an instrumentation image that is presented on the display. The instrumentation image comprises a lateral and/or vertical deviation scale(s) having an actual aircraft position indicator, and a pointer movable along the deviation scale to represent the target aircraft position. In certain embodiments, the instrumentation image comprises an attitude indicator image, and the deviation scale is presented adjacent to the attitude indicator image, whereby area navigation (RNAV) approaches - e.g., Lateral Navigation (LNAV) and/or Vertical Navigation (VNAV) approaches - are preferably enabled.

A visibility attribute is configured to toggle between a standard state when the actual aircraft position is within a predetermined range of the target aircraft position, and an enhanced state when the actual aircraft position is outside the predetermined range of the target aircraft position. The electronic display is configured to highlight a flight path deviation when in the enhanced state. Examples of such highlighting include increasing the size or changing the color of certain displayed elements, or displaying/concealing new elements.

As a result of such highlighting by displaying a graphical scale or the like showing the relative location of the aircraft with respect to its target fight path, as well as other attention-grabbing visual queues, the pilot's understanding and awareness of the actual flight path is enhanced in a manner that alleviates workload, thereby enabling safe manipulation and rapid adjustment. These advantages result in an overall enhancement in aircraft navigation accuracy and operational safety.

For LNAV approaches, the target aircraft position comprises an active route position for the aircraft and the predetermined range comprises a required navigation performance value for the aircraft. Thus, the flight path deviation comprises a lateral deviation of the aircraft from the active route. In such approaches, an enhanced state is triggered when a distance between the actual aircraft position and the active route position is greater than the required navigation performance value. For VNAV approaches, the target aircraft position also comprises a target aircraft altitude, and the aircraft deviation comprises a vertical deviation of the aircraft from the target aircraft altitude. In such approaches, an enhanced state is also triggered when a distance between the actual aircraft position and the target aircraft altitude is greater than the predetermined range.

Other benefits and features of the present invention may become apparent from the following detailed description considered in conjunction with the accompanying drawings. It is to be understood, however, that the drawings are designed solely for purposes of illustration and not as a definition of the limits of the invention, for which reference should be made to the appended claims.

### BRIEF DESCRIPTION OF THE DRAWINGS

In the drawings:
FIG. 1 is a block diagram of an aircraft cockpit instrumentation display system implementing examples of certain embodiments of the present invention;
FIGS. 2A-2B show exemplary illustrations of images shown by an aircraft cockpit instrumentation display system having a lateral RNP deviation scale according to certain embodiments of the present invention;
FIGS. 3A-3F show other exemplary illustrations of images shown by an aircraft cockpit instrumentation display system having a vertical deviation scale according to certain embodiments of the present invention, with FIGS. 3C-3F showing a vertical deviation expanded scale;
FIG. 4 shows an exemplary illustration of another image shown by an aircraft cockpit instrumentation display system in which both RNP and ANP values are displayed and in which a cross track error may be displayed on an ND according to certain embodiments of the present invention;
FIG. 5 shows an exemplary illustration of yet another image shown by an aircraft cockpit instrumentation display system in which both RNP and ANP values are displayed on an ND according to certain embodiments of the present invention; and
FIG. 6 is a flow chart of a method for highlighting the deviation of the aircraft from flight path in accordance with certain embodiments of the present invention.

### DETAILED DESCRIPTION OF EXAMPLES OF EMBODIMENTS

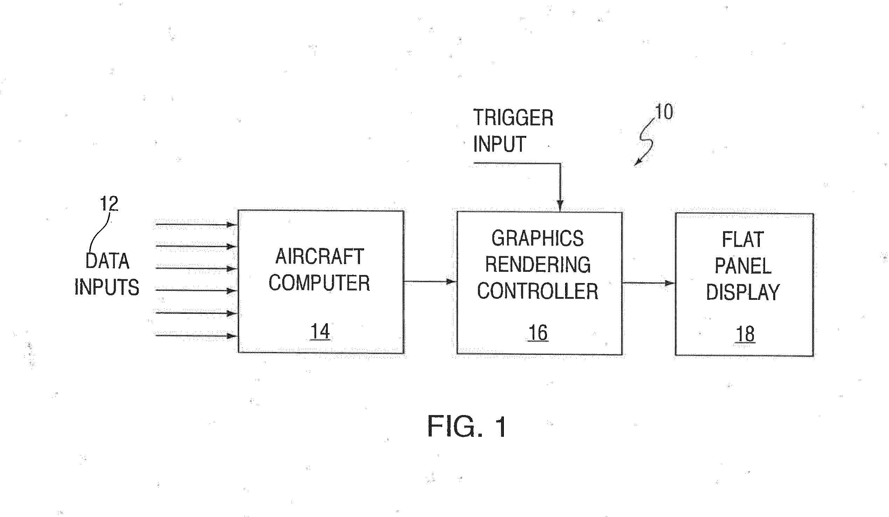

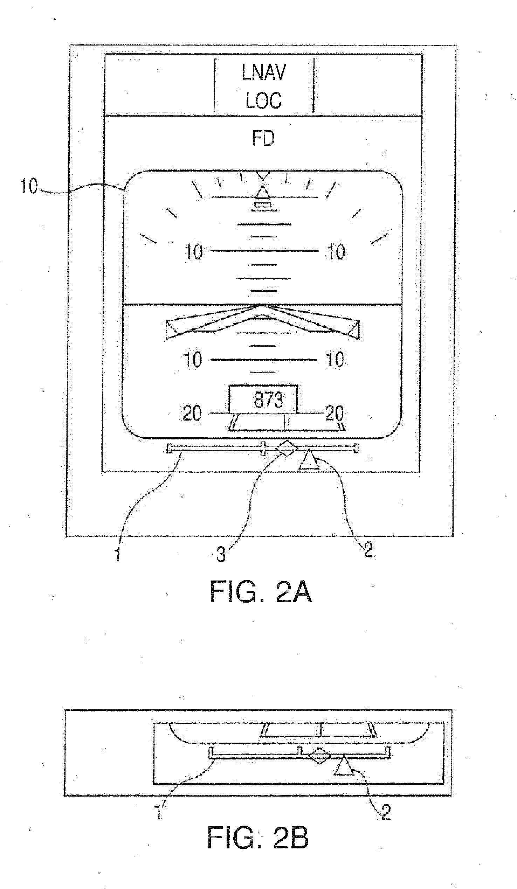

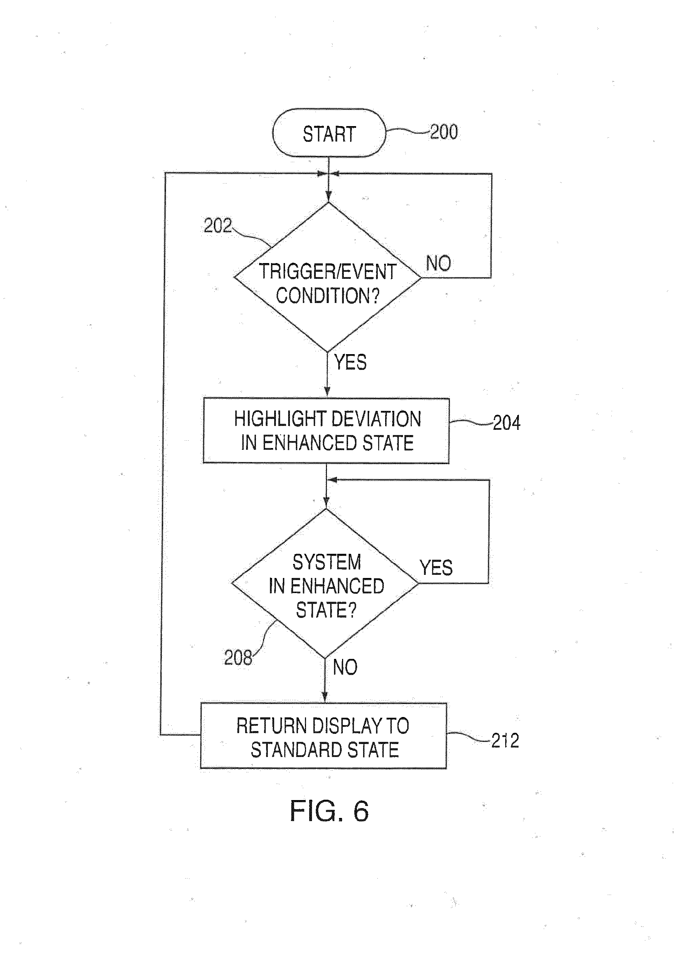

Further details are described below in relation to FIGS. 1-6, whereby FIG. 1 depicts an instrumentation display system for use in conjunction with aircraft cockpit systems. FIGS. 2A-2B, 3A-3F, 4 and 5 illustrate different examples of embodiments of the visual indicia which may be displayed on a screen of the display system in order to direct a pilot or crew member's attention to flight path deviation of an aircraft, and highlight the extent to which the aircraft has deviated from the desired flight path. As for the chart in FIG. 6, it is an example of a process that can be implemented by the display system of FIG. 1 in order to produce the various methods of highlighting the flight path deviation on the screen. Those skilled in the art will recognize, based on this disclosure and an understanding therefrom of the teachings of the invention hereof, that the particular hardware that is part of the system depicted in FIG. 1, as well as the general display examples provided in FIGS. 2A-2B, 3A-3F, 4 and 5 may vary in different embodiments of the invention. Accordingly, the particular system components, exemplary illustrations and chart shown in FIGS. 1, 2A-2B, 3A-3F, 4, 5, and 6 are for illustrative purposes to facilitate a full and complete understanding and appreciation of the various aspects and functionality of particular embodiments of the invention as realized in method and apparatus embodiments thereof.

FIG. 1 depicts an instrumentation display system 10 for use in an aircraft cockpit and in which various embodiments of the invention may be implemented. The display system 10 of FIG. 1 may be of a type typically found in a commercial aircraft. Data inputs 12 from users, onboard aircraft and environmental sensors, ground-based and other data-linked transmissions to the aircraft, a variety of monitoring, processing and computing devices and equipment on-board the aircraft (such as a GPS, Inertial System, DME and/or VOR which are referred to below) or other sources of relevant information which is displayed or which contributes to information displayed in the aircraft cockpit to assist the flight crew in the operation of the aircraft are input to an aircraft computer 14. Aircraft computer 14 may be, or be part of, a Flight Management System (FMS) and may perform a host of data processing and control functions related to the flight and operation of the aircraft, many of which may or may not be related to the subject matter and functionality of the present invention. For example, aircraft computer 14 may determine speed, altitude, engine-pressure-ratio (EPR), limit values, target values, RNP, ANP, vertical or cross track errors (which are discussed in more detail below) and may be coupled etc. based on some of the various inputs 12.

Aircraft computer 14 outputs data signals to a graphics rendering controller or computer 16, in some embodiments, that is operable to receive the data signals and render therefrom electrical signals to present on a connected flat panel display (FPD) 18 graphically-depicted information for use by a pilot or other crew member in operating the aircraft. Rendering computer 16 can take another appropriate form so long as it contains suitable software instructions or programming--or, in some embodiments, dedicated hardware circuitry and/or components--configured or prepared for providing certain inventive functionality and operations as herein disclosed.

FPD 18 may be disposed in the aircraft cockpit in a location selected for ready viewing by the pilot and flight crew, and may present on a single large display screen or several screens, in various embodiments, a wide variety of information and data including, inter alia, primary data required for constant viewing and use by a pilot to maintain control of the aircraft and secondary data relating to, by way of illustrative example, fuel loads, electrical system status, hydraulic pressures and en route leg and estimated destination times. FPD 18 can be one of various types of display, for example, a flat panel display and, moreover, in some embodiments, it can be implemented in a head-up display system in which the displayed data is projected into the view of the aircraft pilot from a projector or other display surface that may or may not be directly visible to the pilot.

Examples of FPD 18 displays include a Primary Flight Display (PFD) which displays flight parameters (whether actual, target, reference and/or limit values) such as orientation, speed, altitude and heading, a Navigation Display (ND) - or Multi-Function Display (MFD) - which displays route and weather information as well as airspace and traffic information, and an Engine Instrument Display (EID) which displays information pertaining to the aircraft's systems (e.g., fuel, electrical and propulsion systems). Such multipurpose FPDs may thus present, in various embodiments, a multiplicity of information and data intermixed in and among a crowded field.

In some embodiments, for example, the invention is equally applicable to a FPD that displays only the particular data or setting or information of interest - such as a dedicated, single-function digital FPD or LCD altimeter - as well as to a FPD that is operable to concurrently display a multiplicity of data or settings or information, among them the particular data or setting or information with respect to which the manual adjustment or setting is required. In some embodiments, the invention may also be applied to the setting of user-adjustable data that is not normally displayed or depicted on a FPD but which, in accordance with the invention, is imaged on the FPD for and during flight path deviation.

The functionality of the present invention may be implemented in the graphics rendering computer 16, for example. As discussed herein, in various embodiments, aspects of the invention provide a predetermined enlargement in the depicted size of data or indications that are normally presented in a relatively smaller size on the display 18, when an actual flight parameter value, such as the actual aircraft position, is outside a predetermined range from a target aircraft position. When the actual aircraft position is outside a predetermined range from the target aircraft position, one more aircraft systems may enter into an enhanced state. When in an enhanced state, the graphics rendering computer 16, via the electrical signals that it directs to the display 18, may highlight such deviation and cause the particular data or indication to be predeterminately enlarged in size or displayed in different color(s), or to appear or be concealed as illustrated in FIGS. 2A-2B, 3A-3F, 4 and 5 on the display, for example.

In certain embodiments, the enlargement, magnification or other highlighting means (such as change in color, flashing, sound emission, etc.) remain, for instance, for at least as long as the actual aircraft position falls outside a predetermined range from the target position. In certain embodiments, the highlighting (e.g., magnification) may be further maintained for an additional time period following the instant the actual aircraft position falls outside the predetermined range. Such embodiments are discussed further below in connection with FIG. 6. The graphics rendering computer 16 can also operatively provide, in some embodiments, that the enlarged data or indication on the display 18 be presented in a translucent or semi-translucent manner so as to permit pilot viewing of other data and indications and images on the display over which the enlarged data or indications appear. In some embodiments, such translucency can be effected by suitable manipulation of the electrical signals directed from the rendering computer 16 to the display 18.

Turning to FIGS. 2A-2B, 3A-3F, 4 and 5, although these figures and the following corresponding discussion are provided in the context of area navigation (RNAV) approaches - e.g., landing approaches that makes use of satellite / GPS navigation - the principles of the invention can be applicable to any other flight phase or situation in which it is desirable to highlight certain flight path deviations.

Examples of RNAV approaches are Lateral Navigation (LNAV) approach and Lateral Navigation/Vertical Navigation (LNAVNNAV) approach, which is similar to the LNAV approach, with the addition of vertical guidance. Required Navigation Performance (RNP) systems essentially incorporate RNAV functionality and additionally provide on-board navigation monitoring and/or alerting. As such RNP systems define the navigation performance required for operation within an airspace and provide the ability to monitor the aircraft's navigation performance and identify for the pilot/crew whether the operational requirement is being met. According to certain embodiments, such identification preferably takes the form of visual indicia displayed on a multi-parameter aircraft instrument display (e.g., a PFD or a ND) that direct the pilot or crew member's attention to navigation or flight path deviation of the aircraft, and highlight the extent to which the aircraft has deviated in a manner that calls the user's attention to the deviation when the flight systems are in an enhanced state because the actual aircraft position is outside a predetermined range of a target position.

FIGS. 2A-2B, 3A-3F, 4 and 5 illustrate different examples of embodiments of the visual indicia which may be displayed on a screen of the display system in order to direct a pilot or crew member's attention to flight path deviation of an aircraft, and highlight the extent to which the aircraft has deviated from the desired flight path. Those skilled in the art will recognize, based on this disclosure and an understanding therefrom of the teachings of the invention hereof, that the particular hardware that is part of the system depicted in FIG. 1.

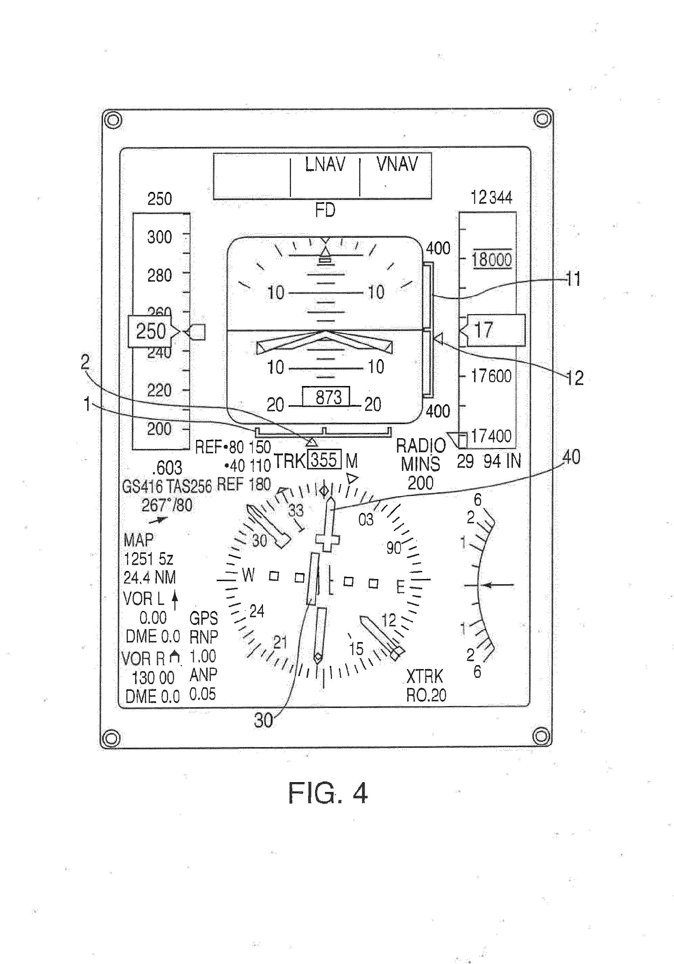

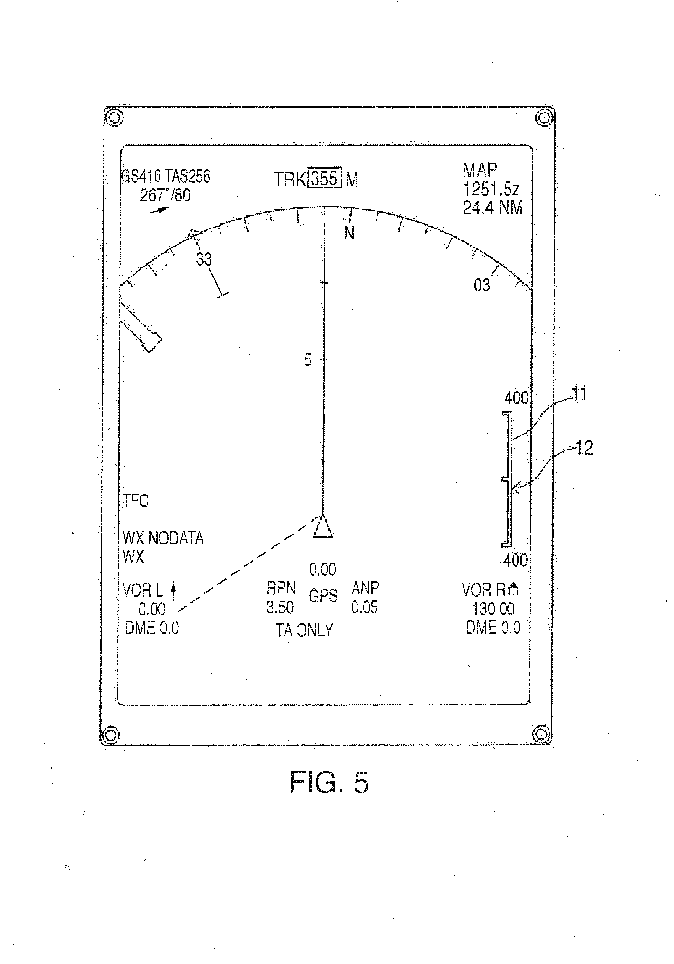

FIG. 2A illustrates a portion of an instrumentation image that can be displayed on a PFD according to certain embodiments. The PFD may include Attitude Indicator (AI) 10 which serves to indicate the orientation of the aircraft. In this exemplary embodiment, the PFD is shown to display deviation scale 1 adjacent to AI 10, which in this example, is a lateral RNP scale. Lateral RNP scale 1 may be displayed when a valid RNP value is received from the FMS and LNAV is armed or engaged (i.e., to provide lateral GPS navigation). The RNP value may be displayed on the PFD and may be expressed in nautical miles. Similarly, an Actual Navigation Performance (ANP) value may be displayed on the PFD and may be expressed in nautical miles. ANP may be calculated using the aircraft GPS, Inertial System, or DME and/or VOR. FIG. 4 illustrates an example in which both RNP and ANP values may be displayed on a PFD. FIG. 5 illustrates an example in which both RNP and ANP values may be displayed on an ND.

In the example shown in FIG. 2A, lateral RNP scale 1 may have an "I" beam configuration in that the sequence marks along the scale extend both above and under the horizontal line corresponding to the lateral scale. Alternatively, lateral RNP scale 1 may have a "U" beam configuration in that the sequence marks along the scale extend only above the horizontal line corresponding to the lateral scale, as shown in FIG. 2B. The left most and right most sequence marks at the ends of RNP scale 1 may represent deviation limits representative of a first and second deviation limit magnitudes from a target lateral aircraft position.

The instrumentation image in FIG. 2A or FIG. 2B also includes pointer 2, which is movable along deviation scale 1, which in this case is a lateral RNP scale. Pointer 2 may be in the shape of a bug and may a have perimeter and inner area, each being configured to be displayed in any color (e.g., magenta, cyan, green, or other color). The position of pointer 2 along lateral RNP scale 1 indicates the target aircraft position, which in this case is the target lateral position or active route position, relative to the aircraft. When pointer 2 is positioned such that it is aligned with the middle sequence mark at the center of RNP scale 1, this indicates that the actual lateral aircraft position matches the target lateral position. When pointer 2 is positioned such that it is to the left or to the right of the middle sequence mark at the center of RNP scale 1, this indicates that a lateral or cross track error exists and the lateral aircraft position does not match the target lateral position. Pointer 2 may be displayed when a valid cross track error is received from the FMS. The cross track error may be displayed on the PFD and may be expressed in nautical miles scaled to the RNP value. FIG. 4 illustrates an example in which a cross track error (XTRK) may be displayed on a PFD. XTRK may be displayed on an ND as well or instead.

One or more aircraft systems may be in a standard state and may enter into an enhanced state. For example, the aforementioned graphics rendering computer may toggle between such states and define a visibility attribute that is based on which state the system is in. The system may be in a standard state when the actual aircraft position (e.g., the lateral position described above and/or the vertical position described below) is within a predetermined range of the target aircraft position. With respect to lateral navigation, the predetermined range may correspond to the RNP value. Thus, the system may be in a standard state when the distance between the lateral aircraft position and the target lateral position or active route is less than or equal to the RNP value. The system may enter the enhanced state when the distance between the lateral aircraft position and the target lateral position or active route is greater than the RNP value. The visibility attribute may toggle between the standard and enhanced state so as to highlight flight path deviation (e.g., cross track error) when in the enhanced state.

Accordingly, as the distance between the aircraft and the active route exceed the RNP value, the system moves from the standard state and enters the enhanced state and so as to highlight the lateral flight path deviation or cross track error by changing the manner (e.g., color, size, fill, shape) in which pointer 2 may be displayed. For example, in certain embodiments, pointer 2 may be open (i.e., the inner area confined by the pointer perimeter is transparent and not colored) when the distance between the aircraft and the active route is larger than the RNP value. Otherwise, pointer 2 may be filled (i.e., the inner area confined by the pointer perimeter has the same color as that of the perimeter) when the distance between the aircraft and the active route is less than or equal to the RNP value. Alternatively or in addition, the size of pointer 2 may be increased in the enhanced state relative to the default state. Alternatively or in addition, the size of pointer 2 may be increased in the enhanced state relative to the default state. For example, the size of the pointer may be increased in a linear fashion to a maximum of 1.5 times its size when there is no deviation (or any other suitable factor depending on the space available on the display screen). Pointer 2 may not be displayed when RNP exceeds ANP, when LNAV is not enabled or when a valid RNP value is not received from the FMS.

Similarly, as the distance between the aircraft and the active route exceed the RNP value, the system moves from the standard state and enters the enhanced state so as to highlight the lateral flight path deviation or cross track error by changing the manner in which RNP scale may be displayed. For example, in certain embodiments, RNP scale 1 may be displayed in a different color (e.g., amber or any color other than white) if the cross track error is greater than the RNP value. Otherwise, RNP scale 1 may be white when the cross track error is less than or equal to the RNP value. RNP scale 1 may not be displayed when ANP exceeds RNP, when LNAV is not enabled or when a valid RNP value is not received from the FMS. Alternatively, RNP scale 1 may remain displayed in the same color regardless of whether any of the foregoing conditions exist or change.

Alternatively or in addition, other display components, such as ones in the horizontal situation indicator that is part of the PFD (as illustrated in FIG. 4), or ones in the ND (as illustrated in FIG. 5), may change color, be zoomed or otherwise highlighted in the enhanced state. For example, vertical deviation scale 11 (as well as a corresponding pointer) may be displayed on an ND as illustrated in FIG. 5. Alternatively or in addition, in the enhanced state, a text box displaying "UNABLE RNP" may be displayed to indicate that navigation performance is not meeting the required accuracy or when fault occurs. The text color may be different depending on whether fault occurs while the aircraft is on an approach, or while the aircraft is not on an approach.

The different display features described above aid in focusing the pilot's attention to RNP scale 1 when the aircraft is deviating from the optimal flight path and causes the system(s) to enter the enhanced state, and thereby increase the likelihood that the pilot would react in a timely manner to ensure navigation accuracy and, therefore, safety.

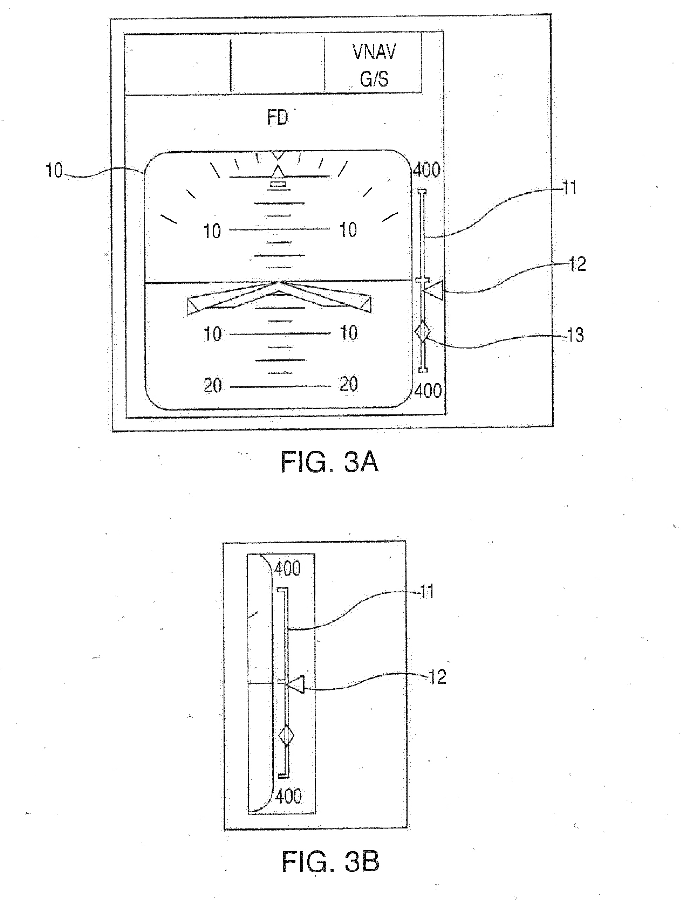

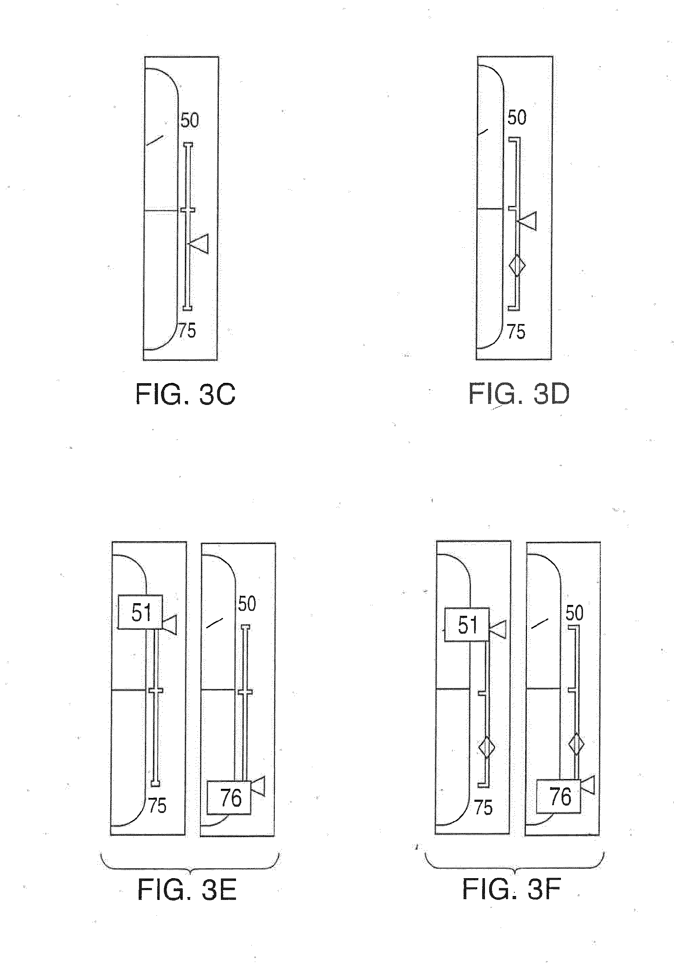

FIG. 3A illustrates a portion of an instrumentation image that can be displayed on a PFD according to certain other embodiments. Like that of FIG. 2A, the PFD may include Attitude Indicator (AI) 10 which serves to indicate the orientation of the aircraft. In this exemplary embodiment, the PFD is shown to display deviation scale 11 adjacent to AI 10, which in this example, is a vertical deviation scale. Vertical deviation scale 11 may be displayed when a valid vertical track error (VTRK) value is received from the FMS and VNAV is armed or engaged (i.e., to provide lateral GPS navigation). The VTRK value may be displayed on the PFD and may be expressed in feet.

In the example shown in FIG. 3A, vertical deviation scale 11 may have an "I" beam configuration in that the sequence marks along the scale extend both to the left and to the right of the vertical line corresponding to the scale. Alternatively, vertical deviation scale 11 may have a "U" beam configuration in that the sequence marks along the scale extend only to the left of the vertical line corresponding to the scale, as shown in FIG. 3B. The upper most and lower most sequence marks at the ends of vertical deviation scale 11 may represent deviation limits representative of a first and second deviation limit magnitudes (which in this instance are shown to be ±400ft) from a target vertical aircraft position.

The instrumentation image in FIG. 3A or FIG. 3B also includes pointer 12, which is movable along deviation scale 11, which in this case is a vertical deviation scale. Pointer 12 may be in the shape of a bug and may have a perimeter and inner area, each being configured to be displayed in any color (e.g., magenta, cyan, green, or other color). The position of pointer 12 along vertical deviation scale 11 indicates the target aircraft position, which in this case is the target vertical path position, relative to the aircraft. When pointer 12 is positioned such that it is aligned with the middle sequence mark at the center vertical deviation scale 11, this indicates that the actual vertical aircraft position matches the target vertical path position. When pointer 12 is positioned such that it is above or below the middle sequence mark at the center of vertical deviation scale 11, this indicates that the a vertical track error exists and the vertical aircraft position does not match the vertical path position. Pointer 12 may be displayed when a valid vertical track error is received from the FMS. The vertical track error may be displayed on the PFD and may be expressed in feet.

As above, the aforementioned graphics rendering computer may toggle between a standard and an enhanced state and define a visibility attribute that is based on which state the system is in. For example, the system may be in a standard state when the actual aircraft position is within a predetermined range of the target aircraft position. With respect to vertical navigation, the predetermined range may correspond to ±400ft, ±420ft or any other suitable range under standard conditions. Thus, the system may be in a standard state when the distance between the vertical aircraft position and the target vertical path position is less than or equal to the predetermined range (e.g., ±400ft) under standard conditions. These may be the values typically selected in certain embodiments. However, the first and second deviation limits may be programmed to be any other values. An exemplary range of values for which the first or second deviation limit may be selected under standard conditions is any value between approximately 200 feet to approximately 500 feet below or above the target aircraft position.

The system may enter the enhanced state when the distance between the vertical aircraft position and the target vertical path position is greater than the predetermined range (e.g., ±400ft) under standard conditions. The visibility attribute may toggle between the standard and enhanced state so as to highlight flight path deviation (e.g., vertical track error) when in the enhanced state.

Accordingly, as the distance between the aircraft and the target vertical path position exceed 400ft in either direction, the system moves from the standard state and enters the enhanced state and so as to highlight the vertical flight path deviation or vertical track error by changing the manner (e.g., color, size, fill, shape) in which pointer 12 may be displayed. For example, in certain embodiments, pointer 12 may be open (i.e., the inner area confined by the pointer perimeter is transparent and not colored) when the distance between the aircraft and the target vertical path position is larger than 400ft Otherwise, pointer 12 may be filled (i.e., the inner area confined by the pointer perimeter has the same color as that of the perimeter) when the distance between the aircraft and the target vertical path position is less than or equal to 400ft. Alternatively or in addition, the size of pointer 12 may be increased in the enhanced state relative to the default state. Alternatively or in addition, the size of pointer 12 may be increased in the enhanced state relative to the default state. For example, the size of the pointer may be increased in a linear fashion to a maximum of 1.35 times its size when there is no deviation (or any other suitable factor depending on the space available on the display screen). Alternatively or in addition, a digital readout that shows the actual value of the deviation above or below the target value is displayed and/or zoomed in the enhanced state. Pointer 12 may not be displayed when VNAV is not enabled or when a valid vertical track error is not received from the FMS.

Similarly, as the distance between the aircraft and the active route exceed the predetermined vertical range, the system moves from the standard state and enters the enhanced state so as to highlight the vertical flight path deviation or vertical track error by changing the manner in which the vertical deviation scale may be displayed. For example, in certain embodiments, vertical deviation scale 11 may be displayed in a different color (e.g., amber or any color other than white) if the vertical track error is greater than, for example, 400ft. Otherwise, vertical deviation scale 1 may be white when the vertical track error is less than or equal to 400ft. Vertical deviation scale 11 may not be displayed when VNAV is not enabled or when a valid track error is not received from the FMS. Alternatively, vertical deviation scale 11 may remain displayed in the same color regardless of whether any of the foregoing conditions exist or change.

Alternatively or in addition, other display components, such as ones in the vertical situation indicator that is part of the PFD, or ones in the ND, may change color, be zoomed or otherwise highlighted in the enhanced state. Alternatively or in addition, in the enhanced state, a text box displaying "UNABLE RNP" may be displayed to indicate that navigation performance is not meeting the required accuracy or when fault occurs. The text color may be different depending on whether fault occurs while the aircraft is on an approach, or while the aircraft is not on an approach.

In certain embodiments, the predetermined vertical range may be modified under non-standard or heightened conditions. For example, the predetermined vertical range may be smaller in such conditions, where the vertical deviation scale that is displayed may be referred to as an "Expanded" scale. FIGS. 3C-3F illustrate such a vertical deviation expanded scale. Under heightened conditions, the predetermined vertical range may range from 50ft under to 75ft over. These may be the values typically selected in certain embodiments. However, the first and second deviation limits may be programmed to be any other values. An exemplary range of values for which the first deviation limit may be selected under heightened deviation tolerance is any value between approximately 25 feet to approximately 75 feet below the target aircraft position. An exemplary range of values for which the second deviation limit may be selected under heightened deviation tolerance is any value between approximately 50 feet to approximately 100 above the target aircraft position.

Accordingly, the system may be in a standard state when the distance between the vertical aircraft position and the target vertical path position is less than or equal to the predetermined range under heightened conditions. The system may enter the enhanced state when the distance between the vertical aircraft position and the target vertical path position is greater than the predetermined range under heightened conditions. The vertical deviation expanded scale of FIGS. 3C-3F may replace the vertical deviation scale of FIGS. 3A-3B under heightened conditions which may be triggered as a result of any one or more of the following conditions: a radio height of less than approximately 2500 feet, a landing gear down condition, an enabled landing gear override switch, a landing flaps set condition, an enabled flap override switch, or any other appropriate condition requiring more care or less tolerance for deviation. The same or similar features as the ones described above in connection with the (non-expanded) vertical deviation scale may apply.

The different display features described above aid in focusing the pilot's attention to vertical deviation scale 11 when the aircraft is deviating from the optimal flight path and causes the system(s) to enter the enhanced state, and thereby increase the likelihood that the pilot would react in a timely manner to ensure navigation accuracy and, therefore, safety.

Much like in vertical navigation, the system may enter a non-standard or heightened condition with respect to lateral navigation. For example, the RNP value may be a smaller in such conditions, where the lateral deviation scale that is displayed may also be referred to as an "Expanded" scale. In such situations, a lateral deviation expanded scale may replace the lateral deviation scale of FIGS. 2A-2B under heightened conditions which may be triggered as a result of any one or more of the following conditions: a radio height of less than approximately 2500 feet, a landing gear down condition, an enabled landing gear override switch, a landing flaps set condition, an enabled flap override switch, or any other appropriate condition requiring more care or less tolerance for deviation. The same or similar features as the ones described above in connection with the (non-expanded) vertical deviation scales may apply to lateral deviation scales.

According to certain embodiments, LNAV and VNAV may be both enabled, which may cause lateral RNP and vertical deviation scales 1 and 11 (as well as corresponding pointers) to be displayed simultaneously, as depicted in FIG. 4. In such embodiments, these different display features aid in focusing the pilot's attention to lateral RNP scale 1 and/or vertical deviation scale 11 when the aircraft is deviating from the optimal flight path and causes the system(s) to enter the enhanced state, and thereby increase the likelihood that the pilot would react in a timely manner to ensure navigation accuracy and, therefore, safety.

FIG. 4 also shows other exemplary indicators which aid in focusing the pilot's attention to an aircraft deviation. For example, a horizontal situation indicator (HIS) that is part of the PFD may include course deviation bar (CDI) 30 which may become unaligned with course select pointer 40 when a cross track error exists and the aircraft position deviates from the active route position. As before, such a deviation from the optimal flight path may cause the system(s) to enter the enhanced state (either when any deviation exists or when the deviation exceeds a predetermined range), and highlight CDI 30 by for example, magnifying/zooming it or causing its color to change, thereby increasing the likelihood that the pilot would react in a timely manner to ensure navigation accuracy and, therefore, safety.

Scales 1 and 11 are depicted as straight line scales in FIGS. 2-3. In other embodiments, scale 1 and scale 11 may be circular and the parameter image may include a legend having a sequence of marks along the periphery of the parameter image. The sequence marks represent different values for the flight parameter. A bug may point to a target, reference or limit value along the sequence of marks, while a needle or arm may point along the sequence of marks of the legend to indicate the changing flight parameter value. Alphanumeric labels proximate to certain marks of the sequence of marks may be presented or displayed so as to identify the values represented by these marks.

The flow chart of FIG. 6 presents an example of an inventive method in accordance with certain embodiments of the invention. For ease of explanation, and without intending to limit the contemplated scope or utility of the invention, it is assumed in discussing FIG. 6 that the parameter or data to monitored and highlighted is lateral or vertical deviation.

At the start 200 of the FIG. 6 procedure, a determination is made at test 202, for instance, whether a predetermined trigger event or condition has occurred. That trigger event may be whether an actual flight parameter value such as the actual aircraft position (lateral or vertical) falls within a predetermined range from a target aircraft position, as discussed above. The predetermined range may be a default or fixed number of units that depends on the parameter or that is a percentage of the target value or otherwise. It may be calculated by the graphics rendering controller or the aircraft computer discussed in connection with FIG. 1. Similarly the graphics rendering controller or the aircraft computer may monitor the actual aircraft position vis-a-vis the target position (i.e. perform test step 202). The test 202 may be continuously repeated until occurrence of the predetermined trigger event has occurred, in response to the satisfaction of which the graphics rendering processor causes (step 204) a portion of the parameter image (e.g., the RNP or vertical deviation scales or pointers of FIGS. 2-5) on the display to be highlighted as the system(s) enter into an enhanced state. Examples of such highlighting are discussed above.

If the highlighting takes the form of an enlargement, such enlargement may be an increase in size by a predetermined factor which may be fixed or which may vary as a function of how close the actual parameter value is to the target value. Examples of such predetermined factors are discussed above. Also as discussed above, the display may additionally or alternatively include a change in color, and/or the presentation of a graphical scale to further draw attention to the parameter, and/or a change in the relative translucency of the presented setting or indication, and/or another suitable depiction for the particular data and application.

With the enhanced state entered into at step 204, the graphics rendering controller or the aircraft computer may continue to monitor the actual parameter value or other aircraft position indicator vis-a-vis the target value and verify whether the condition is still met causing the system(s) to still be in the enhanced state (i.e., perform test step 208). Test step 208 may be achieved, for example, by comparing the ANP to RNP, or considering the distance between the aircraft and the active route, or the cross track error in the case of LNAV. In the case of VNAV, test step 208 may be achieved, for example, by considering the distance between the aircraft and the target vertical path position, or the vertical track error. If, for example, the answer is in the positive, then, in some embodiments, at step 212, the graphics rendering controller may cause the display to return the depicted indication to its normal, unenlarged size or condition, or may zoom out, or change colors or fillings. The method then returns to the test of step 202, in some embodiments, to again await receipt of a further trigger event or condition. If, on the other hand, the answer is in the negative, then, in some embodiments, the test at step 208 is repeated.

In other embodiments, after step 204, an ascending or count-up timer may be initialized, and a determination may be made as to whether condition 208 is still being met. If so, then the timer may be reinitialized, in some embodiments, and the test at step 208 may be repeated, in certain embodiments, until it is determined that the condition causing the system(s) to be in the enhanced state is no longer met, at which point the value of the timer may be tested to determine whether a predetermined time-out interval (e.g., 2 seconds since timer initialization) has been met. If not, in various embodiments, the test at step may be repeated for process 200. If, on the other hand, the timer reveals that the time-out interval of 2, 3 seconds (or any other suitable time interval) has elapsed since the timer was last initialized, then, in some embodiments, at step 212, the graphics rendering computer may cause the display to return the depicted indication to its standard state. In some embodiments, the display may be returned to its original condition (e.g., the enlarged portion may be reduced or the original colors or fills may be restored), following a predetermined time period after which the actual parameter value has either come within the range, fallen outside the range or otherwise compares to target aircraft position. In yet other embodiments, the display may be returned to its original condition automatically after a certain period of time, regardless of whether the actual parameter value is still within the range.

As may be apparent to those skilled in the relevant art, the use in the foregoing descriptions of the RNP or lateral deviation as the data setting being monitored and/or highlighted and displayed is intended to be an example only, and the invention may also or alternatively be applied to numerous other parameters and data (including speed, altitude, heading, N1, N2 and/or N3 % RPM, EPR, oil temperature, pressure and quantity, or other parameters measured through aircraft sensors, environmental sensors, parameters transmitted to the aircraft or entered by the user) that is displayed on an aircraft cockpit FPD or the like for use in the operation and control of the aircraft. These and numerous other such data adjustments and entries may be the subject of the advantageous functionality of various embodiments of the present invention.

Thus, while there have shown and described and pointed out various novel features of the invention as applied to particular embodiments thereof, it will be understood that various omissions and substitutions and changes in the form and details of the methods described and devices illustrated, and in their operation, may be made by those skilled in the art without departing from the spirit of the invention. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment of the invention may be incorporated in another disclosed or described or suggested form or embodiment, which in some cases may be as a general matter of design choice. It is the intention, therefore, to be limited only as indicated by the scope of the claims appended hereto.

## Claims

1. An apparatus for indicating flight path deviation for an aircraft, the apparatus comprising:
a graphics rendering controller configured to generate an instrumentation image; and
an electronic display coupled to the graphics rendering controller to present the instrumentation image;
the instrumentation image comprises:
a deviation scale comprising an actual aircraft position indicator representative of an actual aircraft position;
a pointer movable along the deviation scale to represent the target aircraft position; and
a visibility attribute configured to toggle between:
a standard state when the actual aircraft position is within a predetermined range of the target aircraft position; and
an enhanced state when the actual aircraft position is outside the predetermined range of the target aircraft position;
wherein the electronic display is configured to highlight a flight path deviation
when in the enhanced state.

2. The apparatus of claim 1, wherein:
the instrumentation image further comprises an attitude indicator image; and
the deviation scale is presented adjacent to the attitude indicator image, the deviation scale comprising at least one of:
a lateral deviation scale to indicate a cross track error; or
a vertical deviation scale to indicate a vertical path deviation.

3. The apparatus of claim 1, wherein:
the pointer comprises a perimeter and an inner area;
the perimeter of the pointer comprises a perimeter color;
the visibility attribute comprises an inner color of the inner area of the pointer;
the inner color matches the perimeter color when the standard state of the visibility attribute is enabled; and
the inner color differs from the perimeter color when the enhanced state of the visibility attribute is enabled.

4. The apparatus of claim 1, wherein:
the pointer comprises a perimeter and an inner area;
the perimeter of the pointer comprises a perimeter color;
the visibility attribute comprises an inner color of the inner area of the pointer;
the inner color matches the perimeter color when the enhanced state of the visibility attribute is enabled; and
the inner color differs from the perimeter color when the standard state of the visibility attribute is enabled.

5. The apparatus of claim 1, wherein:
the visibility attribute comprises a size of the pointer;
the size of the pointer comprises a default size when the standard state of the visibility attribute is enabled; and
the size of the pointer is increased relative to the default size when the enhanced state of the visibility attribute is enabled.

6. The apparatus of claim 1, wherein:
the visibility attribute comprises a color of the deviation scale;
the color of the deviation scale comprises a first color when the standard state of the visibility attribute is enabled; and
the color of the deviation scale comprises a second color when the enhanced state of the visibility attribute is enabled.

7. The apparatus of claim 1, wherein:
the target aircraft position comprises an active route position for the aircraft;
the predetermined range comprises a required navigation performance value for the aircraft; and
the flight path deviation comprises a lateral deviation of the aircraft from the active route.

8. The apparatus of claim 1, wherein an enhanced state is triggered when a distance between the actual aircraft position and the active route position is greater than the required navigation performance value.

9. The apparatus of claim 1, wherein the deviation scales further comprise:
a first deviation limit representative of a first deviation limit magnitude from a target aircraft position, the first deviation limit located at a first end of the deviation scale; and
a second deviation limit representative of a second deviation limit magnitude from the target aircraft position, the second deviation limit located at a second end of the deviation scale and opposite the first deviation limit.

10. The apparatus of claim 9, wherein:
when the enhanced state of the visibility attribute is enabled:
a digital readout showing an actual value of the aircraft deviation is displayed when the actual aircraft position exceeds the predetermined range past the first or second deviation limit; and
the digital readout is zoomed when the actual aircraft position exceeds the first or second deviation limit;
the target aircraft position comprises a target aircraft altitude; and
the aircraft deviation comprises a vertical deviation of the aircraft from the target aircraft altitude, wherein an enhanced state is triggered when a distance between the actual aircraft position and the target aircraft altitude is greater than the predetermined range;.

11. The apparatus of claim 9, wherein:
during a standard condition, the first and second deviation limits are scaled to a default deviation tolerance;
during a heightened condition, the first and second deviation limits are scaled to a heightened deviation tolerance; and
the heightened deviation tolerance is smaller in range than the default deviation tolerance.

12. The apparatus of claim 11, wherein the heightened condition is triggered as a result of a condition selected from the group consisting of a radio height of less than approximately 2500 feet, a landing gear down condition, an enabled landing gear override switch, a landing flaps set condition, and an enabled flap override switch.

13. The apparatus of claim 14, wherein:
when the first and second deviation limits are scaled to the heightened deviation tolerance:
the first deviation limit represents the first deviation limit magnitude to be one of:
approximately 25 feet to approximately 75 feet below the target aircraft position;
approximately 50 feet below the target aircraft position;
approximately 200 feet to approximately 500 feet below the target aircraft position; or
approximately 400 feet below the target aircraft position; and the second deviation limit represents the second deviation limit magnitude to be one of:
approximately 50 feet to approximately 100 above the target aircraft position;
approximately 75 feet above the target aircraft position;
approximately 200 feet to approximately 500 feet above the target aircraft position; or
approximately 400 feet above the target aircraft position.

14. The apparatus of claim 1, wherein:
the graphics rendering controller is coupled to an aircraft computer;
the first and second deviation limits are based on required navigation path data from the aircraft computer.

15. The apparatus of claim 1, wherein when in the standard state, at least one of the deviation scale or the pointer are concealed.
